# EUROPEAN PATENT SPECIFICATION

(11) **EP 4 309 975 B1**
(45) Date of publication and mention of the grant of the patent: **02.09.2026**
(21) Application number: 23169079.3
(22) Date of filing: 20.04.2023
(51) Int. Cl.: B62D 15/02, B60Q 9/00, B60T 7/12

(54) **AUTOMATIC PARKING ASSISTANCE SYSTEM**
AUTOMATISCHES EINPARKASSISTENZSYSTEM
SYSTÈME D'AIDE AU STATIONNEMENT AUTOMATIQUE

(30) Priority: 21.07.2022 JP 2022116103
(43) Date of publication of application: 24.01.2024
(73) Proprietor: Suzuki Motor Corporation, Hamamatsu-shi, Shizuoka 432-8611 (JP)
(72) Inventor: OHYAMA, Ryouhei, HAMAMATSU-SHI, 432-8611 (JP)
(74) Representative: Plasseraud IP

(56) References cited:
- JP-A- 2005 239 048
- JP-A- 2019 023 008
- US-A1- 2019 344 828

## Description

### BACKGROUND OF THE INVENTION

### Field of the Invention

The present invention relates to an automatic parking assistance system for a vehicle having an autonomous driving function.

### Description of the Related Art

Conventionally, automatic parking is known as one form of autonomous driving of a vehicle. In the automatic parking, parking operation, monitoring of the surroundings of the vehicle, or avoidance of a collision accident is automatically performed instead of by a driver.

When the driver operates a steering device or a shift lever in the automatic parking, an image of the surroundings of the vehicle is displayed on a monitor in the vehicle interior on the basis of images obtained by cameras set in the vehicle. One or more persons in the vehicle in which the driver is included (hereinafter collectively referred to as a user) can check the state of the automatic parking in real time by checking the monitor.

In a recent technique, the display is switched in response to the user's instruction from a wide-range display of a surrounding image depicting a wide range around the vehicle to a narrow-range display in which one region in the surrounding image is focused on (i.e., enlarged) and displayed.

Regarding the use of the surrounding image, an image display system configured to allow the user to readily check a position of an obstacle from the surrounding image is disclosed in Japanese Unexamined Patent Application Publication No. 2012-216991. US2019/344828 discloses a parking assist apparatus displaying an image of the vehicle and of a vicinity of the vehicle as viewed from a position separated from the vehicle at a point in time at which the vehicle has reached the target region. US 2019/344828 discloses in particular the features of the preamble of claim 1.

In the above-described conventionals techniques, however, the user needs to give instructions for switching the display mode of the surrounding image.

### SUMMARY OF THE INVENTION

An object of the present invention is to provide an automatic parking assistance system that displays a surrounding image in a timely and appropriate manner without requiring a user to operate the display system.

The automatic parking assistance system is defined by the features of claim 1.

### Effect of the Invention

According to the present invention, an automatic parking assistance system that displays a surrounding image in a timely and appropriate manner without requiring a user to operate the display system will be provided.

### BRIEF DESCRIPTION OF THE DRAWINGS

In the accompanying drawings:
Fig. 1 is a block diagram illustrating a configuration of a vehicle to which an automatic parking system according to the first embodiment of the present invention is applied.
Fig. 2A is a schematic diagram illustrating an actual detection range of each ultrasonic sensor.
Fig. 2B is a schematic diagram illustrating a rough detection range obtained by integrating the detection ranges of the respective ultrasonic sensors.
Fig. 3A is a schematic diagram illustrating a display mode of a monitor screen when a vehicle is away from a parking position.
Fig. 3B is a schematic diagram illustrating a display mode of the monitor screen when the vehicle approaches the parking position;
Fig. 4A is a schematic diagram illustrating a display operate the display system will be provided.

### BRIEF DESCRIPTION OF THE DRAWINGS

In the accompanying drawings:

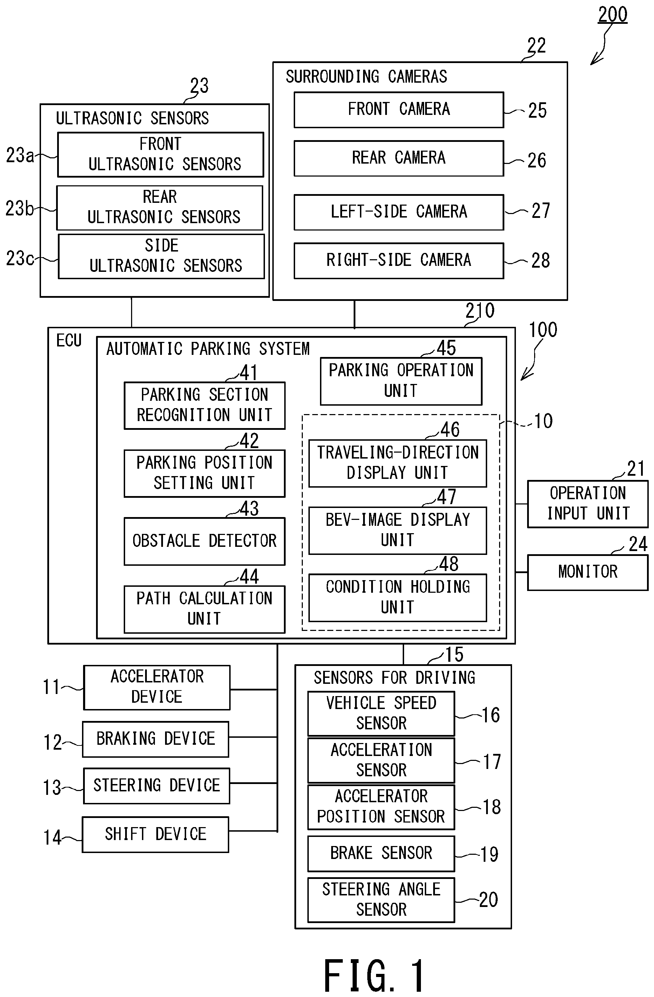

Fig. 1 is a block diagram illustrating a configuration of a vehicle to which an automatic parking system according to the first embodiment of the present invention is applied.

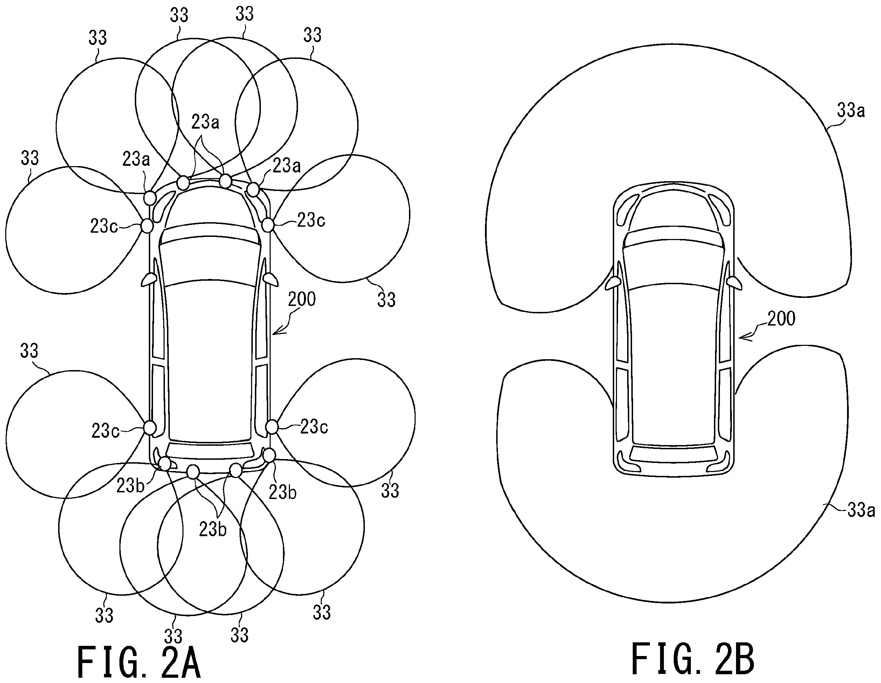

Fig. 2A is a schematic diagram illustrating an actual detection range of each ultrasonic sensor.
Fig. 2B is a schematic diagram illustrating a rough detection range obtained by integrating the detection ranges of the respective ultrasonic sensors.

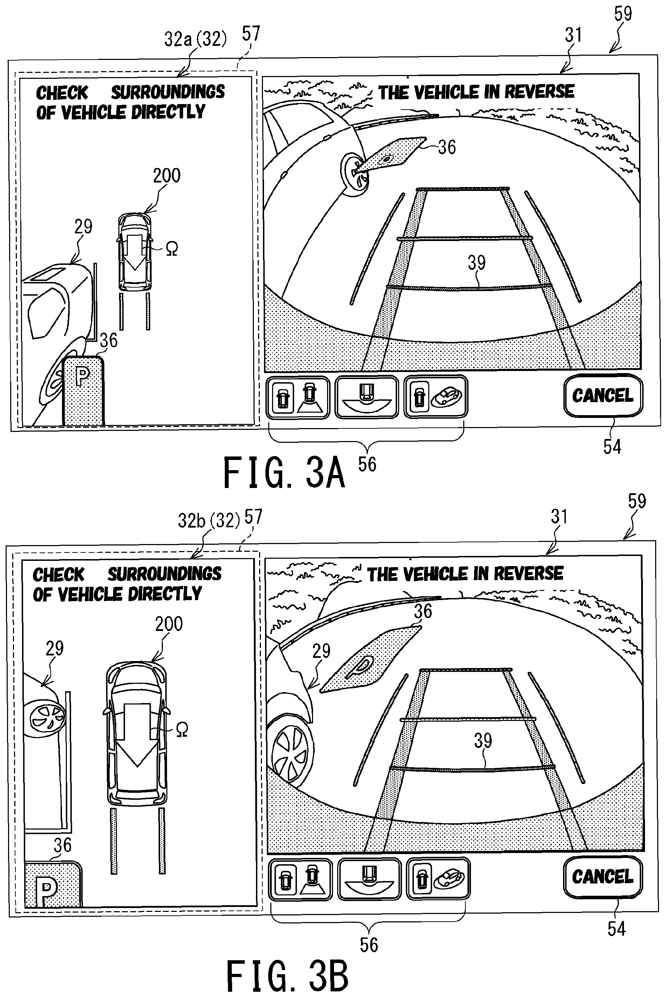

Fig. 3A is a schematic diagram illustrating a display mode of a monitor screen when a vehicle is away from a parking position.
Fig. 3B is a schematic diagram illustrating a display mode of the monitor screen when the vehicle approaches the parking position;

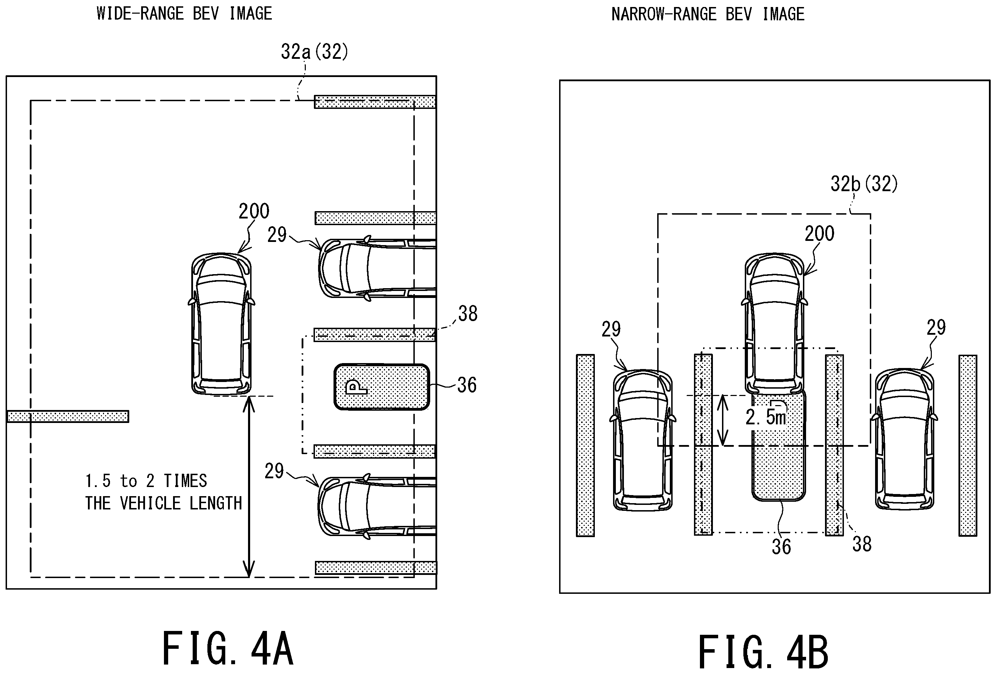

Fig. 4A is a schematic diagram illustrating a display range of a wide-range BEV (Bird's-Eye View) image;
Fig. 4B is a schematic diagram illustrating a display range of a narrow-BEV image;

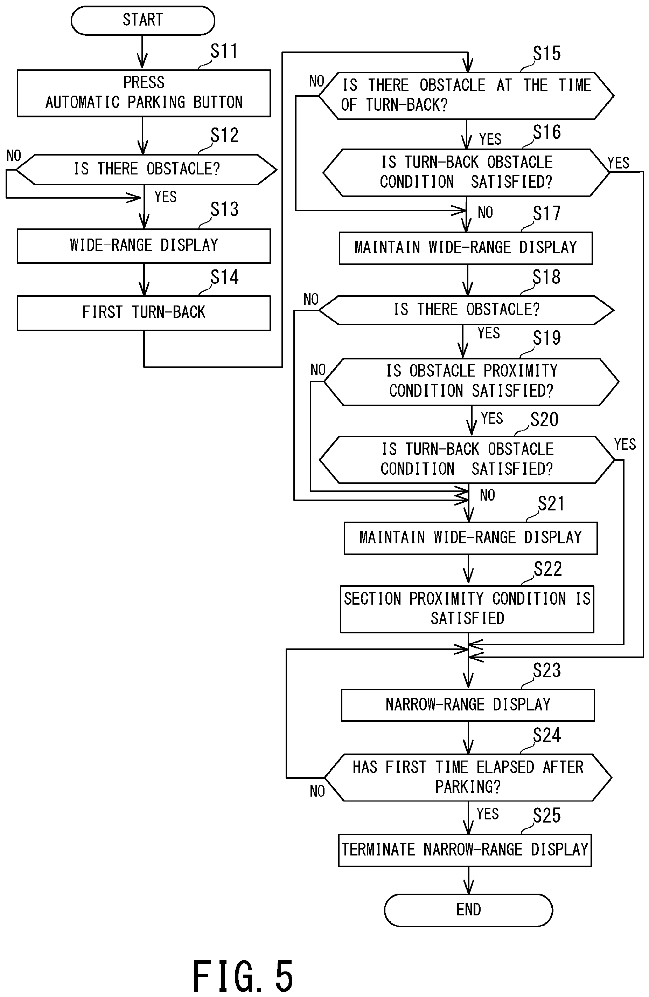

Fig. 5 is a flowchart of operation that includes an automatic parking assistance method according to the first embodiment of the present invention; and

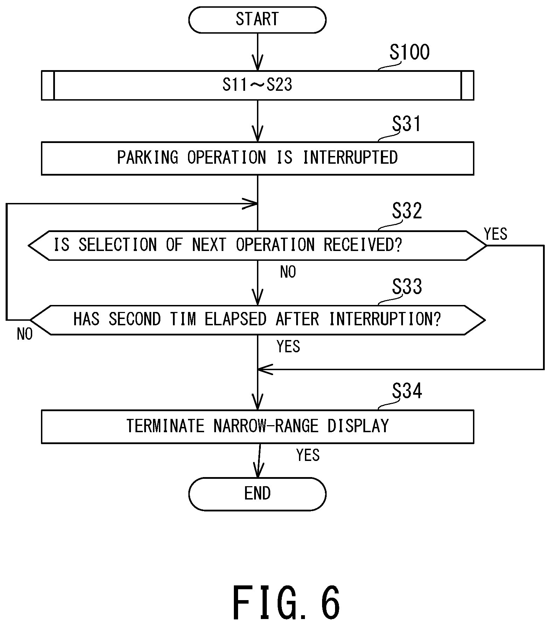

Fig. 6 is a flowchart of operation that includes the automatic parking assistance method according to the second embodiment of the present invention.

### DETAILED DESCRIPTION

Hereinbelow, embodiments of the present invention will be described by referring to the accompanying drawings.

### (First Embodiment)

### <1. Related Devices of Automatic Parking System 100>

First, the relationship between an automatic parking system 100 (hereinafter simply referred to as "the parking system 100") and related devices in a vehicle 200 will be described by referring to Fig. 1.

Fig. 1 is a block diagram illustrating the configuration of the vehicle 200 to which the parking system 100 according to the first embodiment of the present invention is applied.

The parking system 100 is a computer including hardware components such as a CPU, a RAM, and a ROM, and is mounted on an ECU (Electronic Control Unit) 210 of the vehicle 200, for example.

As shown in Fig. 1, the parking system 100 is communicably connected to each of an accelerator device 11, a braking device 12, a steering device 13, and a shift device 14 that are provided for driving the vehicle 200, and controls these driving-system components 11 to 14.

The parking system 100 is also communicably connected to sensors for driving 15, an operation input unit 21, surrounding cameras 22, ultrasonic sensors 23, and a monitor 24.

The sensors 15 are composed of, for example, a vehicle speed sensor 16, an acceleration sensor 17, an accelerator position sensor 18, a brake sensor 19, and a steering angle sensor 20. The parking system 100 detects the running state of the vehicle 200 and controls the driving-system components 11 to 14 on the basis of information acquired from the sensors 15.

The operation input unit 21 is, for example, a set of buttons including: an operation selection button for selecting the next operation of the vehicle 200; and an automatic parking button that receives an instruction to start the automatic parking from a user such as a driver and a person on the passenger's seat. The operation input unit 21 may be a hardware switch or an icon on a touch panel constituting the screen of the monitor 24. When the automatic parking button is pressed, the automatic parking is started.

The surrounding cameras 22 are composed of a plurality of imaging cameras mounted on the vehicle 200, and include: a front camera 25 attached to the front end of the vehicle 200; a rear camera 26 attached to the rear end of the vehicle 200; a left side camera 27 attached to a left side mirror; and a right side camera 28 attached to a right side mirror, for example.

Each of the cameras 25 to 28 of the surrounding cameras 22 acquires digitized images of the surroundings of the vehicle 200 with an optical lens and an image sensor.

The ultrasonic sensors 23 are also called parking sensors. During the automatic parking, each of the ultrasonic sensors 23 transmits an ultrasonic wave and then detects the reflected ultrasonic wave to identify a direction of at least one obstacle 29 and distance to the obstacle 29 (see Fig. 3A and Fig. 3B), for example. The ultrasonic sensors 23 are composed of: front ultrasonic sensors 23a that are provided on the front portion of the vehicle 200 and transmit ultrasonic waves forward; rear ultrasonic sensors 23b that are provided on the rear portion of the vehicle 200 and transmit ultrasonic waves rearward; and side ultrasonic sensors 23c that are provided on the side of the vehicle 200 and transmit ultrasonic waves to the side.

The respective front ultrasonic sensors 23a are installed at several portions on the front portion of the vehicle 200.

Fig. 2A illustrates the actual detection range 33 of each of the ultrasonic sensors 23a to 23c. Fig. 2B illustrates a rough detection range 33a obtained by integrating the respective detection ranges of the ultrasonic sensors 23a to 23c.

As shown in Fig. 2A, the front ultrasonic sensors 23a have characteristics that the detection distance is long in the transmission direction of the ultrasonic wave from the installation position of each front ultrasonic sensor 23a and is short in the direction orthogonal to this transmission direction. The detection range 33a of all these front ultrasonic sensors 23a is the integration of the respective detection ranges 33 of these front ultrasonic sensors 23a, as shown in Fig. 2B. The detection range 33 of these front ultrasonic sensors 23a overlaps the detection range 33 of the side ultrasonic sensors 23c. As a result, the detection range 33a in front of the vehicle 200 by the ultrasonic sensors 23a and 23c has approximately a fan shape centered at the front portion of the vehicle 200.

The same holds true for the rear ultrasonic sensors 23b. In other words, the detection range 33a of all the rear ultrasonic sensors 23b is the integration of the detection ranges 33 of the respective rear ultrasonic sensors 23b that are provided at several positions on the rear portion of the vehicle 200. The detection range 33 of these rear ultrasonic sensor 23b overlaps the detection range 33 of the side ultrasonic sensors 23c. As a result, the detection range 33a in the rear of the vehicle 200 by the ultrasonic sensors 23b and 23c has approximately a fan shape centered at the rear portion of the vehicle 200.

The monitor 24 is installed on an instrument panel between the driver's seat and the passenger's seat, for example. The monitor 24 displays a screen such as a car navigation screen and a music playback screen in response to user's operation except during the automatic parking. During the automatic parking, the monitor 24 displays an image depicting the state of the surrounding imaged by the surrounding cameras 22, as described below in detail. Note that the monitor 24 may be a touch panel that receives user's operation as the operation input unit 21.

### <2. Parking System 100 and Automatic Parking Assistance System 10>

Next, the parking system 100 will be described by referring to Fig. 3A, Fig. 3B, Fig. 4A, and Fig. 4B in addition to Fig. 1.

Each of Fig. 3A and Fig. 3B is a schematic diagram illustrating a monitor screen 59 to be displayed on the monitor 24.

Fig. 3A illustrates a display mode of the monitor screen 59 when the vehicle 200 is at a distance from a parking position 36.

Fig. 3B illustrates a display mode of the monitor screen 59 when the vehicle 200 approaches the parking position 36.

Fig. 4A is a schematic diagram illustrating a display range of a wide-range BEV (Bird's-Eye View) image 32a.

Fig. 4B is a schematic diagram illustrating a display range of a narrow-BEV image 32b.

In the present specification, the BEV (Bird's-Eye View) image such as the wide-BEV image 32a and the narrow-BEV image 32b means an image that is obtained by imaging the surroundings of the vehicle 200 including the vehicle 200 itself and depicts the surrounding as viewed from above.

As shown in Fig. 1, the parking system 100 includes: a parking section recognition unit 41; a parking position setting unit 42; an obstacle detector 43; a path calculation unit 44; and a parking operation unit 45.

The parking system 100 further includes: a traveling-direction display unit 46; a BEV-image display unit 47; and a condition holding unit 48, and these units 46 to 48 constitute an automatic parking assistance system 10 (hereinafter simply referred to as the assistance system 10). The parking system 100 automatically or semi-automatically parks the vehicle 200 at a desired parking position 36 by exerting the functions of the internal components 41 to 48.

The functions of the internal components 41 to 48 of the parking system 100 are executed by causing the CPU to execute arithmetic processing on the basis of predetermined programs. The condition holding unit 48 is configured of a RAM or a ROM.

As shown in Fig. 4A and Fig. 4B, the parking section recognition unit 41 recognizes a parking section 38 for the vehicle 200 when the operation input unit 21 outputs a parking instruction in response to operation by the user such as the driver. The parking section recognition unit 41 recognizes the parking section 38 on the basis of at least one of: white lines on the ground; and inter-vehicle distance from another parked vehicle, both of which are shown in the surrounding images acquired by the surrounding cameras 22, for example.

The parking position setting unit 42 sets the parking position 36 of the vehicle 200 on the basis of the parking section 38.

The obstacle detector 43 detects the obstacle 29 around the vehicle 200 by using, for example, the ultrasonic sensors 23.

The path calculation unit 44 calculates the path to park the vehicle 200 at the parking position 36. This path includes a turn-back point in the traveling direction Ω of the vehicle 200 and a turn-back path. In addition, the path calculation unit 44 corrects the path to park the vehicle 200 when the position of the obstacle 29 is updated or newly obtained from the obstacle detector 43 during the automatic parking.

The parking operation unit 45 operates the accelerator device 11, the steering device 13, the braking device 12, and the shift device 14 to drive the vehicle 200 in such a manner that the vehicle 200 follows the calculated path and is parked at the parking position 36. On the other hand, in the case of semi-automatic parking in which the driver manually changes the shift position of the shift device 14, the shift device 14 may not be controlled by the parking system 100. Further, even during the automatic parking, the driver can activate the braking device 12 to forcibly stop the vehicle 200.

The assistance system 10 timely displays a traveling-direction image 31 and the BEV image 32 in the respective assigned regions on the monitor screen 59, as a whole. The assistance system 10 is composed of the condition holding unit 48, the traveling-direction display unit 46, and the BEV-image display unit 47. Hereinafter, each configuration of the assistance system 10 will be described.

The condition holding unit 48 holds an obstacle proximity condition and a section proximity condition.

The obstacle proximity condition means that the distance between the vehicle 200 and the obstacle 29 is equal to or shorter than predetermined first distance during the automatic parking (i.e., during parking operation by the parking operation unit 45). The first distance is set in the range of about 0.5 to 1.5 meters from the center of the vehicle 200 so as to be included in the detection range 33 of the ultrasonic sensors 23, for example. The first distance is not a single distance from the vehicle 200 but is various distances between: the front end or rear end of the vehicle 200; and a fan-shaped line drawn from the front end or rear end of the vehicle 200 as shown in Fig. 2A and Fig. 2B.

The section proximity condition is that the distance between the vehicle 200 and the parking section 38 at the parking position 36 becomes equal to or shorter than predetermined second distance during the automatic parking. The second distance is, for example, about 2 meters from the center of the vehicle 200. In other words, each of the obstacle proximity condition and the section proximity condition defines a situation in which the surroundings of the vehicle 200 should be checked by the user in more detail.

The traveling-direction display unit 46 output the traveling-direction image 31 obtained by imaging the front exterior or the rear exterior of the vehicle 200 on the monitor 24, as shown in Fig. 3A and Fig. 3B.

The traveling-direction display unit 46 first combines a plurality of images, which are images of either the front exterior or the rear exterior of the vehicle 200 simultaneously acquired by the cameras 25 to 28, into one combined image. The traveling-direction display unit 46 performs distortion correction, size-enlargement/size-reduction, and segmenting (i.e., partial extraction) on this combined image to generate the traveling-direction image 31 and displays the traveling-direction image 31 on the monitor 24.

The monitor screen 59 displays a switching button 56 as a touch panel icon at its bottom, and this switching button 56 is used for giving instruction on switching the display mode of a plurality of traveling-direction images 31 and the BEV image 32 described below. Alongside the switching button 56, the monitor screen 59 displays a cancel button 54 as an icon for canceling the display mode selected by the switching button 56.

The BEV-image display unit 47 displays the BEV image 32, which is obtained by imaging the surroundings of the vehicle 200 including the vehicle 200 itself and depicts the surrounding as viewed from above, in a predetermined region 57 on the monitor 24 as shown in Fig. 3A, Fig. 3B, Fig. 4A, and Fig. 4B. The display region 57 of the BEV image 32 is, for example, on the right or the left of the traveling-direction image 31 on the monitor screen 59. In other words, the traveling-direction image 31 and the BEV image 32 are displayed side by side in the horizontal direction. Note that the respective display positions of the traveling-direction image 31 and the BEV image 32 on the monitor screen 59 are not limited to the above-described aspect.

The BEV-image display unit 47 generates a combined image from respective images that are generated by causing the front camera 25, the rear camera 26, the left-side camera 27, and the right-side camera to image the surroundings of the vehicle 200 simultaneously. Further, the BEV-image display unit 47 performs distortion correction, size-enlargement/size-reduction, and segmenting on this combined image. On the basis of this combined image, the BEV-image display unit 47 generates the BEV image 32 that depicts the surroundings of the vehicle 200 as viewed from above.

The user of the vehicle 200 can grasp the state of the surroundings of the vehicle 200 almost in real time from the traveling-direction image 31 and the BEV image 32 displayed in this manner.

When at least one of the obstacle proximity condition and the section proximity condition is satisfied during the automatic parking, the BEV-image display unit 47 switches the display from the wide-BEV image 32a to the narrow-BEV image 32b to be displayed in the display region 57 on the monitor 24. In other words, the BEV-image display unit 47 switches the display on the monitor 24 to the narrow-BEV image 32b when the vehicle 200 approaches the obstacle 29 or reaches the vicinity of the intended parking section 38 during the automatic parking.

The wide-BEV image 32a is a BEV image 32 in which the surrounding including the vehicle 200 itself is depicted in a wide field of view, as shown in Fig. 4A. In the wide-BEV image 32a, the length from the front and rear ends of the vehicle 200 to the front and rear edges of the field of view is about 1.5 to 2 times the length of the vehicle, for example.

The narrow-BEV image 32b is a BEV image 32 in which the surroundings of the vehicle 200 is enlarged (i.e., depicted in an enlarged manner) by narrowing the field of view more than that in the wide-BEV image 32a, as shown in Fig. 4B. In other words, the wide-BEV image 32a corresponds to the wide-range display of the BEV image 32, and the narrow-BEV image 32b corresponds to the narrow-range display of the BEV image 32. In the narrow-BEV image 32b, the length from the front and rear ends of the vehicle 200 to the front and rear edges of the field of view is about 2.5 meters, for example.

At the time of switching the display mode from the wide-BEV image 32a to the narrow-BEV image 32b, the display region 57 on the monitor 24 may maintain the same size before and after the switching as shown in Fig. 3A and Fig. 3B so that the user can confidingly check the BEV image 32 without confusion.

The second distance, which defines the threshold for switching to the narrow-range display as the distance from the vehicle 200 to the parking section 38, is preferably set to a value larger than the first distance that defines the threshold for switching to the narrow-range display as the distance from the vehicle 200 to the obstacle 29. This is because, once the vehicle 200 approaches the parking section 38, the range of the subsequent movement of the vehicle 200 becomes smaller and thus the need for the wide-range display is reduced. Accordingly, when the vehicle 200 approaches the parking section 38, the display mode on the monitor 24 switches to the narrow-range display before the distance between the vehicle 200 and the obstacle 29 becomes shorter than the second distance, and such switching of the display mode enables the user to recognize the obstacle 29 near the parking position 36 slightly earlier.

However, each of the first distance and the second distance can be defined in an arbitrary manner and may be defined as distance different from the above-described distance within the detection range of the ultrasonic sensors 23.

In order to enable the user to predict switching of the display mode of the BEV image 32, a turn-back mark line 39 is superimposed and displayed on the traveling-direction image 31. When the obstacle 29 reaches the turn-back mark line 39, the traveling direction Ω of the vehicle 200 is switched and the display mode of the BEV image 32 is switched to the narrow-range display.

If the field of view of the BEV image 32 is narrowed at the timing when the narrow-range display is not required, the user cannot recognize the wider range of the surrounding including the vehicle 200 itself, and may feel fear and discomfort. Thus, it is preferred that the timing of performing the switch from the wide-range display to the narrow-range display is not too early.

For example, even in the case where a certain structure enters the detection range 33 of the ultrasonic sensors 23, when the structure is not considered the obstacle 29 by which the vehicle 200 is required to turn back, there is little need for the narrow-range display at an early stage.

For this reason, preferably, the condition holding unit 48 further holds an obstacle condition for turn-back defining that the obstacle 29 is an object requiring the vehicle 200 to reverse its traveling direction. The BEV-image display unit 47 preferably continues the wide-range display when the obstacle condition for turn-back is not satisfied, regardless of whether the obstacle proximity condition is satisfied or not. Imposing the obstacle condition for turn-back can restrict the switching from the wide-range display to the narrow-range display to only the cases where there is a great need for the user to check the parking conditions. Imposing the obstacle condition for turn-back can also prevent the driver from unnecessarily using the braking device 12 due to the narrow field of view of the BEV image 32. However, in the case where the obstacle 29 does not satisfy the obstacle condition for turn-back, when the obstacle 29 to the vehicle 200 is within a third distance shorter than the second distance, it is preferred to switch the display mode to the narrow-range display.

### <3. Automatic Parking Assistance Method>

Next, the automatic parking assistance method according to the first embodiment of the present invention will be described by referring to the flowchart of Fig. 5. In addition to the display operation in the automatic parking, the flowchart also shows the operation on the user side in order to facilitate understanding. In the following, a description will be given of the case where turn-back of the traveling direction Ω is performed at least once (in the step S14).

In the first step S11, the driver turns on the automatic parking switch (i.e., presses the automatic parking button) and starts the automatic parking under the control of the parking system 100.

When the vehicle 200 enters a parking lot of a large store or a public parking lot, many vehicles may be already parked as the obstacles 29. Near the entrance of the parking lot, fences and utility poles are provided in some cases, and the vehicle 200 may approach these structures depending on the parking conditions. In this manner, at the start of the automatic parking, obstacle 29 satisfying the obstacle proximity condition may already exist.

At the time of entering the parking lot, however, the distance from the vehicle 200 to the parking position 36 is long, and thus, the movement amount of the vehicle 200 after the entering is usually large. In such a case, if the display mode of the BEV image 32 is switched to the narrow-range display because of existence of the obstacle 29 that satisfies the obstacle proximity condition, the driver has to drive long distance while monitoring the surrounding with a narrowed field of view. As described above, if the narrow-range display is used at the timing when the user does not need to check and understand the surrounding in detail, the user may feel fear and discomfort. For this reason, the display mode of the BEV image 32 is set to the wide-range display at the start of the automatic parking is maintained until the narrow-range display is requested.

On the basis of the above-described policy, at the start of the automatic parking, regardless of existence/non-existence of the obstacle 29 (i.e., regardless of YES/NO in the step S12), the wide-BEV image 32a is displayed on the monitor screen 59 together with the traveling-direction image 31 in the step S13.

The wide-range display of the BEV image 32 is maintained until the traveling direction Ω is reversed in the step S14.

When the vehicle 200 reaches the turning point of the traveling direction Ω calculated by the path calculation unit 44, in the step S14, the parking operation unit 45 turns back, i.e., reverses the traveling direction Ω for the first time.

At the time of this first turn-back, if there is no obstacle 29 around the vehicle 200 (No in the step S15), the processing proceeds to the step S17 in which the BEV-image display unit 47 maintains the wide-range display of the BEV image 32.

At the time of this first turn-back, if the obstacle 29 exists (YES in the step S15) but this obstacle 29 does not satisfy the obstacle condition for turn-back (NO in the step S16), the processing proceeds to the step S17 in which the BEV-image display unit 47 maintains the wide-range display.

At the time of this first turn-back, if the obstacle 29 exists (YES in the step S15) and this obstacle 29 satisfies the obstacle condition for turn-back (YES in the step S16), the processing proceeds to the step S23 in which the BEV-image display unit 47 switches the display mode of the BEV image 32 from the wide-range display to the narrow-range display. From the viewpoint of reducing the switching frequency of the BEV image 32, after displaying the narrow-BEV image 32b, it is preferred to continue the narrow-range display of the narrow-BEV image 32b without switching back to the wide-range display of the wide-BEV image 32a until completion of the automatic parking. This is because the automatic parking of the vehicle 200 is performed by the parking operation unit 45 along the path calculated in advance by the path calculation unit 44, and the movement range of the vehicle 200 after switching to the narrow-BEV image 32b is estimated to be small.

After the step S17, if there is no obstacle 29 (NO in the step S18), the processing proceeds to the step S21 in which the BEV image 32 is maintained in the wide-range display.

If the obstacle 29 exists (YES in the step S18) but this obstacle 29 does not satisfy the obstacle proximity condition (NO in the step S19), the BEV image 32 is maintained in the wide-range display in the step S21.

If the obstacle 29 exists (YES in the step S18), and the obstacle 29 satisfies the obstacle proximity condition (YES in the step S19) but does not satisfy the obstacle condition for turn-back (NO in the step S20), the BEV image 32 is maintained in the wide-range display in the step S21.

Conversely, if this obstacle 29 satisfies both the obstacle proximity condition and the obstacle condition for turn-back (YES in both steps S19 and S20), the processing proceeds to the step S23 in which the BEV image 32 is switched to the narrow-range display.

After the step S21, when the vehicle 200 approaches the parking section 38, the section proximity condition is inevitably satisfied in the step S22, and then, the BEV-image display unit 47 switches the display mode of the BEV image 32 to the narrow-range display in the step S23. In other words, regardless of whether the previous display mode of the BEV image 32 is the wide-range display or the narrow-range display, when the vehicle 200 approaches the parking section 38, the BEV image 32 is switched to the narrow-range display. Near the parking position 36, many of the obstacles 29 are more likely related to parking. Thus, displaying the enlarged surrounding by the narrow-range display near the parking position 36 allows the user to check details of the obstacle(s) 29 at the parking position 36 a little earlier.

This narrow-range display continues until a first time, which is predetermined, such as several seconds to several minutes' elapses from the timing when the vehicle 200 stops at the parking position 36 (i.e., if NO in the step S24, the processing returns to the step S23).

This is because, for a certain period of time immediately after stopping of the vehicle 200, the user usually needs to check the distance between the vehicle 200 and the nearby obstacle 29 in detail. If the first time elapses after the stop (YES in the step S24), the narrow-range display is terminated in the step S25. After terminating the narrow-range display, the BEV image 32 may be switched back to the wide-range display or the monitor screen 59 may be turned off. The timing of terminating the narrow-range display may be the timing at which the shift position is switched to neutral and the parking brake is applied, instead of the timing after elapse of the predetermined first time.

According to the assistance system 10 of the first embodiment described above, the BEV image 32 can be displayed in a timely and appropriate manner without the user's operation.

### (Second Embodiment)

In the second embodiment, on the basis of the flowchart of Fig. 6, a description will be given of the operation procedure when the automatic parking is interrupted after switching to the narrow-range display.

Fig. 6 is a flowchart of the operation including the automatic parking assistance method in the second embodiment.

The subroutine S100 in Fig. 6 refers to the processing from pressing of the automatic parking button in the step S11 to switching to the narrow-range display in the step S23 in the flowchart of Fig. 5. In other words, the second embodiment shows the operation when the automatic parking is interrupted after execution of the narrow-range display in the step S23 of the first embodiment.

The automatic parking may be interrupted by sudden appearance of the obstacle 29 or by the driver stepping on the braking device 12 during the automatic parking. The automatic parking is also interrupted when the vehicle stops parking and changes its course to a new destination. In the second embodiment, a description will be given of the display mode of the BEV image 32 in the case of having interruption in the automatic parking.

If the automatic parking is interrupted in the step S31, the parking operation unit 45 receives selection of the next operation from the user in the step S32. For example, selectable items for the next operation include: resumption of the automatic parking; automatic departure from the current position; automatic return for returning to the start position; and cancellation of the automatic parking.

If the parking operation unit 45 does not receive selection of the next operation after a second time, which is predetermined, elapses from the start of the interruption (No in the step S32 and YES in the step S33), the processing proceeds to the step S34 in which the BEV-image display unit 47 terminate the narrow-range display and display the wide-BEV image 32a on the monitor 24.

When the user selects the next operation, from the viewpoint of allowing the user to appropriately select the next operation in consideration of the surrounding, it is preferred that the display mode of the BEV image 32 is the wide-range display. This is because the wide-range display facilitates grasping of the entire surrounding including the vehicle 200 itself and facilitates checking of the automatic departure position and/or the return position as compared with the narrow-range display. If the next operation is not selected even after elapse of the second time, there is a possibility that the narrow-BEV image 32b does not include the automatic departure position and/or the return position and the user is not aware of the position. For this reason, after elapse of the second time, the BEV image 32 is switched back to the wide-range display so that the user can grasp the wide-range surrounding including the vehicle 200 itself. The second time is, for example, several tens of seconds to several minutes.

When the automatic parking is interrupted by the detection of the obstacle 29, the user often takes action to grasp the positional relationship between the vehicle 200 and the obstacle 29. Hence, maintaining the narrow-range display during the second time enables the user to grasp the detailed positional relationship between the vehicle 200 and the adjacent obstacle 29 before getting off the vehicle 200.

If the parking operation unit 45 receives selection of the next operation (YES in the step S32), the processing proceeds to the step S34 in which the BEV-image display unit 47 terminate the narrow-range display and display the wide-BEV image 32a on the monitor 24. If the next operation is selected, the vehicle 200 usually moves largely depending on the selected operation. Thus, if selection of the next operation is received from the user, the BEV image 32 is switched back to the wide-range display.

The assistance system 10 and the parking system 100 according to the second embodiment operate in the same manner as those of the first embodiment, except the operation in the case of the automatic parking being interrupted. Hence, in Fig. 6, the same reference sign is given to the same step as those in Fig. 5, and duplicate description is omitted.

According to the assistance system 10 of the second embodiment described above, the BEV image 32 once switched to the narrow-range display can be switched back to the wide-range display at an appropriate timing.

Although a description has been given of the case where the obstacle 29 is detected by the ultrasonic sensors 23 in each embodiment, the position of the obstacle 29 may be specified by using AI technology from the images acquired by the surrounding cameras 22.

## Claims

1. An automatic parking assistance system (100) comprising:
a BEV-image display unit (47) configured to output a Bird'-Eye View image (32) in a predetermined area on a monitor (24) inside a vehicle (200) having an autonomous driving function during automatic parking of the vehicle (200), the BEV image (32) being an image that is obtained by imaging surroundings of the vehicle (200) including the vehicle itself and depicts the surroundings as viewed from above; and
a condition holding unit (48) configured to hold an obstacle proximity condition, a section proximity condition, and a turn-back obstacle condition, the obstacle proximity condition defining that distance between the vehicle (200) and an obstacle (29) is equal to or shorter than predetermined first distance during the automatic parking, the section proximity condition defining that distance between the vehicle (200) and a parking section (38) of a parking position (36) scheduled at a time of the automatic parking is equal to or shorter than predetermined second distance, and the turn-back obstacle condition defining that the obstacle (29) is an object requiring a temporary stop and a turn-back of a traveling direction for the vehicle (200),
**characterized in that** the BEV-image display unit (47) is configured to switch display in the predetermined area of the monitor (24) from wide-range display of a wide-BEV image (32a) to narrow-range display of a narrow-BEV image (32b) that is obtained by narrowing a field of view of the wide-BEV image (32a) and depicts enlarged surroundings of the vehicle (200) when the obstacle proximity condition and the turn-back obstacle condition are satisfied or when the section proximity condition is satisfied.

2. The automatic parking assistance system (100) according to claim 1, wherein the BEV-image display unit (47) is configured to continue the wide-range display before a first turn-back from start of the automatic parking, even when the obstacle proximity condition is satisfied.

3. The automatic parking assistance system (100) according to claim 1, wherein the BEV-image display unit (47) is configured to continue the narrow-range display after switching to the narrow-range display until completion of the automatic parking.

4. The automatic parking assistance system (100) according to claim 1, wherein the narrow-range display is terminated when predetermined first time elapses after the vehicle (200) is parked at the parking position (36).

5. The automatic parking assistance system according to claim 1, wherein, when the automatic parking is interrupted, display of the monitor is switched from the narrow-range display to the wide-range display after the elapse of predetermined second time from start of interruption of the automatic parking.

6. The automatic parking assistance system (100) according to claim 1, wherein the predetermined second distance is longer than the predetermined first distance.

## Patentansprüche

1. Automatisches Parkassistenzsystem (100), umfassend:
eine BEV-Bild-Anzeigeeinheit (47), welche dazu eingerichtet ist, ein Vogelperspektiven-Bild (32) in einem vorbestimmten Bereich auf einem Monitor (24) im Inneren eines Fahrzeugs (200), welches eine autonome Fahrfunktion aufweist, während eines automatischen Parkens des Fahrzeugs (200) auszugeben, wobei das BEV-Bild (32) ein Bild ist, welches durch Abbilden einer Umgebung des Fahrzeugs (200) einschließlich des Fahrzeugs selbst erhalten wird und die Umgebung von oben betrachtet darstellt; und
eine Bedingungsspeichereinheit (48), welche dazu eingerichtet ist, eine Hindernisannäherungsbedingung, eine Sektionsannäherungsbedingung und eine Umkehr-Hindernisbedingung zu speichern, wobei die Hindernisannäherungsbedingung definiert, dass ein Abstand zwischen dem Fahrzeug (200) und einem Hindernis (29) während des automatischen Parkens gleich oder kürzer als ein vorbestimmter erster Abstand ist, die Sektionsannäherungsbedingung definiert, dass ein Abstand zwischen dem Fahrzeug (200) und einer Parksektion (38) einer Parkposition (36), welche zu einem Zeitpunkt des automatischen Parkens vorgesehen ist, gleich oder kürzer als ein vorbestimmter zweiter Abstand ist, und die Umkehr-Hindernisbedingung definiert, dass das Hindernis (29) ein Objekt ist, welches einen vorübergehenden Halt und eine Umkehr einer Fahrtrichtung für das Fahrzeug (200) erfordert,
**dadurch gekennzeichnet, dass** die BEV-Bild-Anzeigeeinheit (47) dazu eingerichtet ist, eine Anzeige in dem vorbestimmten Bereich des Monitors (24) von einer Weitbereich-Anzeige eines Weitwinkel-BEV-Bildes (32a) auf eine Nahbereich-Anzeige eines Nahbereich-BEV-Bildes (32b) umzuschalten, welches durch Einengen eines Sichtfeldes des Weitwinkel-BEV-Bildes (32a) erhalten wird und eine vergrößerte Umgebung des Fahrzeugs (200) darstellt, wenn die Hindernisannäherungsbedingung und die Umkehr-Hindernisbedingung erfüllt sind oder wenn die Sektionsannäherungsbedingung erfüllt ist.

2. Automatisches Parkassistenzsystem (100) nach Anspruch 1, wobei die BEV-Bild-Anzeigeeinheit (47) dazu eingerichtet ist, die Weitbereich-Anzeige vor einer ersten Umkehr ab Beginn des automatischen Parkens fortzuführen, selbst wenn die Hindernisannäherungsbedingung erfüllt ist.

3. Automatisches Parkassistenzsystem (100) nach Anspruch 1, wobei die BEV-Bild-Anzeigeeinheit (47) dazu eingerichtet ist, die Nahbereich-Anzeige nach einem Umschalten auf die Nahbereich-Anzeige bis zu einem Abschluss des automatischen Parkens fortzuführen.

4. Automatisches Parkassistenzsystem (100) nach Anspruch 1, wobei die Nahbereich-Anzeige beendet wird, wenn eine vorbestimmte erste Zeitspanne verstreicht, nachdem das Fahrzeug (200) an der Parkposition (36) geparkt worden ist.

5. Automatisches Parkassistenzsystem nach Anspruch 1, wobei, wenn das automatische Parken unterbrochen wird, eine Anzeige des Monitors nach dem Verstreichen einer vorbestimmten zweiten Zeitspanne ab Beginn einer Unterbrechung des automatischen Parkens von der Nahbereich-Anzeige auf die Weitbereich-Anzeige umgeschaltet wird.

6. Automatisches Parkassistenzsystem (100) nach Anspruch 1, wobei der vorbestimmte zweite Abstand länger als der vorbestimmte erste Abstand ist.

## Revendications

1. Système d'aide au stationnement automatique (100), comprenant :
une unité d'affichage d'image BEV (47) configurée pour restituer une image en vue aérienne (BEV) (32) dans une zone prédéterminée sur un écran (24) à l'intérieur d'un véhicule (200) doté d'une fonction de conduite autonome lors du stationnement automatique du véhicule (200), l'image BEV (32) étant une image qui est obtenue en filmant les environs du véhicule (200) incluant le véhicule lui-même et qui représente les environs dans une vue de dessus ; et
une unité de maintien de conditions (48) configurée pour maintenir une condition de proximité d'obstacle, une condition de proximité de section et une condition d'obstacle nécessitant un demi-tour, la condition de proximité d'obstacle définissant que la distance entre le véhicule (200) et un obstacle (29) est égale ou inférieure à une première distance prédéterminée lors du stationnement automatique, la condition de proximité de section définissant que la distance entre le véhicule (200) et une section de stationnement (38) d'une position de stationnement (36) prévue au moment du stationnement automatique est égale ou inférieure à une seconde distance prédéterminée, et la condition d'obstacle nécessitant un demi-tour définissant que l'obstacle (29) est un objet nécessitant un arrêt temporaire et un demi-tour d'une direction de déplacement pour le véhicule (200),
**caractérisé en ce que** l'unité d'affichage d'image BEV (47) est configurée pour commuter l'affichage dans la zone prédéterminée de l'écran (24) d'un affichage à large portée d'une image BEV large (32a) à un affichage à portée étroite d'une image BEV étroite (32b) qui est obtenue en rétrécissant un champ de vision de l'image BEV large (32a) et représente les environs agrandis du véhicule (200) lorsque la condition de proximité d'obstacle et la condition d'obstacle nécessitant un demi-tour sont remplies ou lorsque la condition de proximité de section est remplie.

2. Système d'aide au stationnement automatique (100) selon la revendication 1, dans lequel l'unité d'affichage d'image BEV (47) est configurée pour poursuivre l'affichage à large portée avant un premier demi-tour depuis le début du stationnement automatique, même lorsque la condition de proximité d'obstacle est remplie.

3. Système d'aide au stationnement automatique (100) selon la revendication 1, dans lequel l'unité d'affichage d'image BEV (47) est configurée pour poursuivre l'affichage à portée étroite après la commutation vers l'affichage à portée étroite jusqu'à l'achèvement du stationnement automatique.

4. Système d'aide au stationnement automatique (100) selon la revendication 1, dans lequel l'affichage à portée étroite est interrompu lors de l'écoulement d'une première durée prédéterminée après le stationnement du véhicule (200) au niveau de la position de stationnement (36).

5. Système d'aide au stationnement automatique selon la revendication 1, dans lequel, lorsque le stationnement automatique est interrompu, l'affichage de l'écran est commuté de l'affichage à portée étroite vers l'affichage à large portée après l'écoulement d'une seconde durée prédéterminée à partir du début de l'interruption du stationnement automatique.

6. Système d'aide au stationnement automatique (100) selon la revendication 1, dans lequel la seconde distance prédéterminée est plus longue que la première distance prédéterminée.
